# EUROPEAN PATENT APPLICATION

(11) **EP 2 067 758 A1**
(43) Date of publication of application: **10.06.2009**
(21) Application number: 08170846.3
(22) Date of filing: 05.12.2008
(51) Int. Cl.: C04B 38/00, F01N 3/00, B01D 46/00, B01D 46/24, B01D 53/92

(54) **Method for manufacturing a plasma treatment device for exhaust gas purification**

(30) Priority: 07.12.2007 JP 2007317553
(71) Applicant: Kabushiki Kaisha Toyota Jidoshokki, Kariya-shi, Aichi 448-8671 (JP)
(72) Inventor: Kidokoro, Atsushi c/o K. K. Toyota Jidoshokki, Kariya-shi, Aichi 448-8671 (JP); Yoshida, Koji c/o K. K. Toyota Jidoshokki, Kariya-shi, Aichi 448-8671 (JP)
(74) Representative: TBK-Patent

(57) **Abstract**

A plasma treatment device (1) for exhaust gas purification includes a honeycomb body (2) and metal electrodes (3A-3E). The honeycomb body (2) is made of dielectric and has therein a plurality of holes (2A) which introduces exhaust gas thereinto. The metal electrodes extend along the holes, and are interposed between the holes. The plasma treatment device purifies the exhaust gas by applying electric voltage between the metal electrodes to generate plasma inside the holes. A method for manufacturing the plasma treatment device includes steps of positioning the metal electrodes in an extrusion die, providing dielectric material for the honeycomb body into the extrusion die, and performing extrusion so as to form the honeycomb body thereby integrating the honeycomb body with the metal electrodes.

## Description

### BACKGROUND OF THE INVENTION

The present invention relates to a method for manufacturing a plasma treatment device for exhaust gas purification, in which harmful components contained in exhaust gas are removed.

PCT international publication No. W02004/004869, or, the equivalent U.S. patent No. 7,326,264, discloses a plasma treatment device for exhaust gas purification. The plasma treatment device has a honeycomb body made of porous ceramic material. In the honeycomb body, a plurality of longitudinal holes is formed so as to extend in the honeycomb body. Each longitudinal hole has a diamond-shaped cross-section to form a diamond arrangement. The holes are defined by partition walls which collect particulate matter as harmful components contained in exhaust gas. Metal electrodes are embedded in the partition walls located at the corners of the diamond-shaped cross-sections of the holes. The metal electrodes in the form of conductive wire extend along the holes, and are connected to an electric power source. When the electric power source applies electric voltage between the metal electrodes, plasma is generated in the holes. As a result, the particulate matter collected by the partition walls are oxidized and removed from the honeycomb body.

In manufacturing the plasma treatment device in which the metal electrodes extend along the longitudinal holes in the honeycomb body, as is the case of the above reference, a process for embedding the metal electrodes in the honeycomb body is required. However, the honeycomb body is made of brittle ceramic material, and the honeycomb body and the metal electrodes are not easily integrated. Therefore, it is difficult to improve efficiency in manufacturing the plasma treatment device.

The present invention is directed to provide a method for manufacturing a plasma treatment device for exhaust gas purification so as to easily integrate metal electrodes with a honeycomb body and to improve efficiency in manufacturing thereof.

### SUMMARY OF THE INVENTION

In accordance with the present invention, a method for manufacturing a plasma treatment device for exhaust gas purification is provided. The plasma treatment device for exhaust gas purification includes a honeycomb body and a plurality of metal electrodes. In the present invention, "honeycomb body" includes not only a structure having an arrangement with hexagonal cross-sections, but also structures having arrangements with rectangular, or other polygonal cross-sections, or circular cross-sections, as long as the structures include longitudinal holes for the plasma treatment device. The honeycomb body is made of dielectric and has therein a plurality of holes which introduces exhaust gas thereinto. The metal electrodes extend along the holes, and are interposed between the holes. The plasma treatment device purifies exhaust gas by applying electric voltage between the metal electrodes to generate plasma inside the holes. The method for manufacturing the plasma treatment device includes steps of positioning the metal electrodes in an extrusion die, providing dielectric material for the honeycomb body into the extrusion die, and performing extrusion so as to form the honeycomb body thereby integrating the honeycomb body with the metal electrodes.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
Fig. 1 is a schematic perspective view of a plasma treatment device for exhaust gas purification according to a first preferred embodiment of the present invention;
Fig. 2 is a schematic perspective view of metal electrodes according to the first preferred embodiment;
Fig. 3 is a fragmentally front elevational view showing the structure of the plasma treatment device for exhaust gas purification according the first preferred embodiment;
Fig. 4 is a fragmentally cross-sectional side view of the plasma treatment device taken along the line III - III in Fig. 3;
Fig. 5 is a schematic cross-sectional side view of an extrusion device according to the first preferred embodiment;
Fig. 6 is a schematic cross-sectional front view of an extrusion die of the extrusion device, which is taken along the line IV - IV in Fig. 5, according to the first preferred embodiment;
Fig. 7 is a schematic exploded perspective view of a plasma treatment device for exhaust gas purification according to a second preferred embodiment; and
Fig. 8 is a schematic front view of a honeycomb body and metal electrodes as an alternative embodiment, in which the configurations thereof are different from those of the first and the second embodiments.

### DETAILED DESCRIPTION OF THE PREFERRED EMBODIMENTS

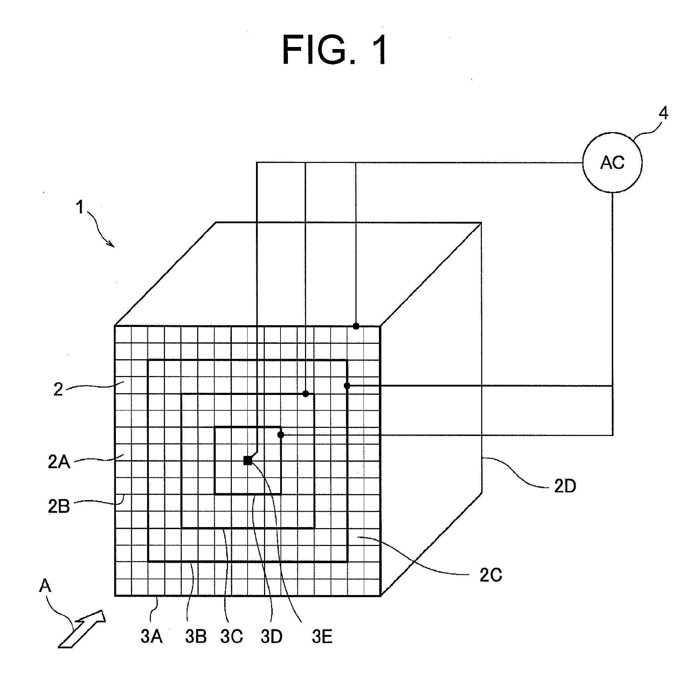

A first preferred embodiment according to the present invention will be described with reference to Figs. 1 through 4. Firstly, the structure of a plasma treatment device for exhaust gas purification 1 (hereinafter referred to merely as plasma treatment device 1) will be explained. In case the plasma treatment device 1 is installed in a vehicle, the plasma treatment device 1 is provided in an exhaust passage of an engine not shown in the drawings, so that exhaust gas from the engine flows into the plasma treatment device 1.

As shown in Fig. 1, the plasma treatment device 1 has a rectangular cross-sectional honeycomb body 2 so as to form a rectangular cylinder shape. The honeycomb body 2 forms a diesel particulate filter (hereinafter referred to as DPF) of a flow-through type, which is made of porous ceramic material as a dielectric. The honeycomb body 2 has a plurality of rectangular cross-sectional holes 2A and a plurality of partition walls 2B to define the holes 2A in the honeycomb body 2. The holes 2A are in a grid arrangement, and longitudinally extend in parallel with each other through the honeycomb body 2 from one end face 2C to the other end face 2D. The exhaust gas introduced into the plasma treatment device 1 flows through the holes 2A of the honeycomb body 2 in the direction indicated by an arrow A in Fig. 1. While the exhaust gas flows through the holes 2A, diesel particulate matter (hereinafter referred to as PM) is collected by the partition walls 2B.

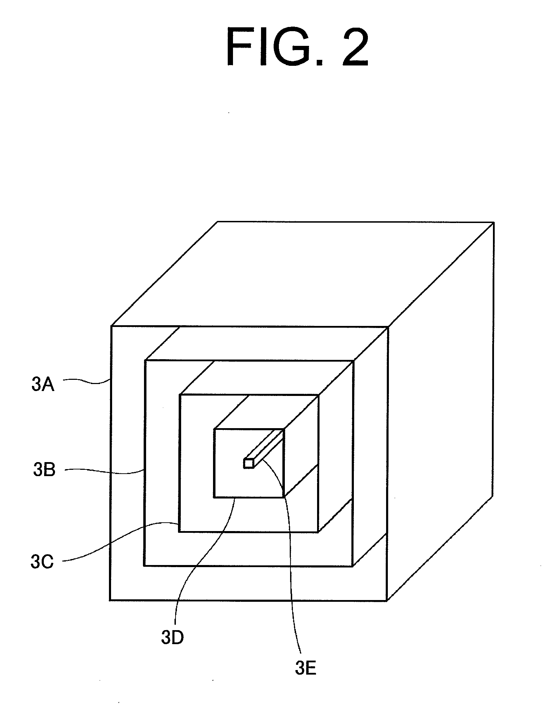

The plasma treatment device 1 has metal electrodes 3A, 3B, 3C, 3D, and 3E. The metal electrode 3A covers the outer periphery of the honeycomb body 2. The metal electrodes 3B, 3C, 3D, and 3E are embedded in the honeycomb body 2. As shown in Fig. 2, the metal electrodes 3A, 3B, 3C, and 3D are formed in such a way that thin metal plates are configured in rectangular cylinder shapes whose opposite ends are open, respectively. The metal electrodes 3A, 3B, 3C, and 3D have different-sized rectangular cross-sections so that the dimensions of the metal electrodes 3A, 3B, 3C, and 3D are in descending order. The metal electrodes 3B, 3C, and 3D are arranged so that the centers of the rectangular cross-sections thereof are overlapped. The metal electrode 3E is made of the same metal as that of the metal electrodes 3A, 3B, 3C, and 3D, and is configured in the form of conductive wire. The metal electrode 3E extends through the center of the metal electrode 3D, which is located innermost of the metal electrodes 3A, 3B, 3C, and 3D.

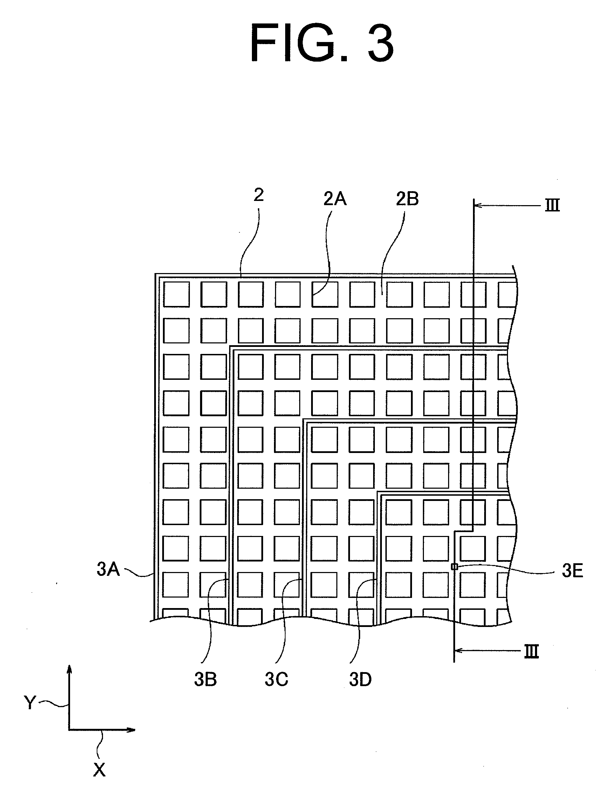

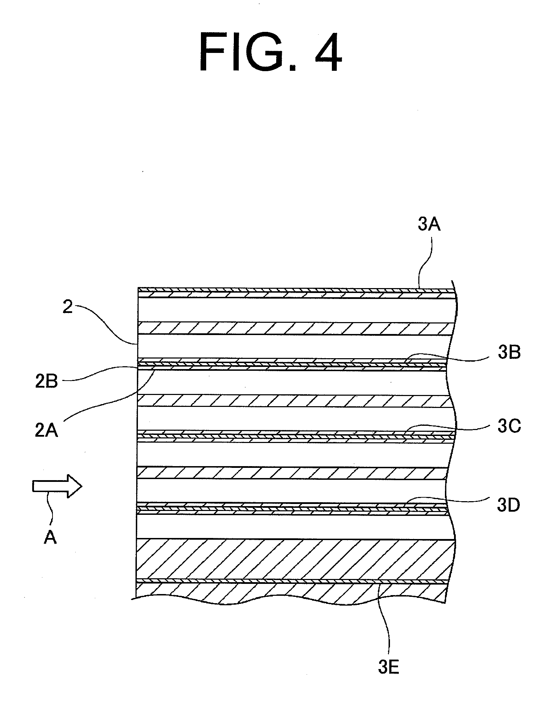

As shown in Fig. 3, the metal electrode 3A which is located at the outermost of the metal electrodes 3A, 3B, 3C, 3D, and 3E covers the honeycomb body 2 while contacting with the outer periphery of the honeycomb body 2. The metal electrodes 3B, 3C, 3D, and 3E at the inner side of the metal electrode 3A are embedded in the partition walls 2B. The metal electrodes 3A, 3B, 3C, 3D, and 3E are located in such a manner that two rows of holes 2A are interposed therebetween in the horizontal and vertical directions indicated by arrows X, Y in Fig. 3. That is, the metal electrodes 3A, 3B, 3C, 3D, and 3E are arranged at regular intervals in such a state that the both surfaces or one surface of the metal electrodes 3A, 3B, 3C, 3D, and 3E are covered with the partition walls 2A. Further, each of the metal electrodes 3A, 3B, 3C, 3D, and 3E is interposed between the holes 2A and partition walls 2B in the directions of the arrows X,Y in Fig. 3. As shown in Fig. 4, the metal electrodes 3A, 3B, 3C, 3D, and 3E in the above-described arrangement extend along the holes 2A at the outer periphery and the inner portion of the honeycomb body 2.

Referring back to Fig. 1, the metal electrodes 3A, 3B, 3C, 3D, and 3E are connected to an AC-power source 4 (alternative-current power source) provided at the outside of the plasma treatment device 1 through two wires. One of the wires is connected to the metal electrodes 3A, 3C, and 3E, and the other is connected to the metal electrodes 3B and 3D. The polarities of the AC-power source 4 connected to adjacent two of the metal electrodes 3A, 3B, 3C, 3D, and 3E are set to be different with each other. The outermost metal electrode 3A, which covers the outer periphery of the honeycomb body 2, may be connected to the cool side or the ground side of the AC-power source 4, thereby being utilized as a casing of the plasma treatment device 1.

The following will describe the operation of the plasma treatment device 1 of the first preferred embodiment according to the present invention. As shown in Fig. 1, exhaust gas from the engine (not shown) flows in the direction indicated by the arrow A, and flows into the plasma treatment device 1 through the holes 2A of the honeycomb body 2. Since the honeycomb body 2 is made of porous ceramic material, PM contained in the exhaust gas is collected by the partition walls 2B defining the holes 2A, while flowing through the holes 2A.

When the amount of PM collected and accumulated by the honeycomb body 2 reaches a predetermined value, the AC-power source 4 applies electric voltage between the metal electrodes 3A, 3B, 3C, 3D, and 3E. The metal electrodes 3A, 3B, 3C, 3D, and 3E are connected to the AC-power source 4 in such a way that the polarities of adjacent two of the metal electrodes 3A, 3B, 3C, 3D, and 3E are different with each other. Therefore, the partition walls 2B covering the metal electrodes 3B, 3C, 3D, and 3E and the inner surface of the metal electrode 3A serve as dielectrics, and generate plasma inside the holes 2A located between the metal electrodes 3A, 3B, 3C, 3D, and 3E. The plasma generated inside the holes 2A oxidizes and removes the PM collected by the partition walls 2B of the honeycomb body 2.

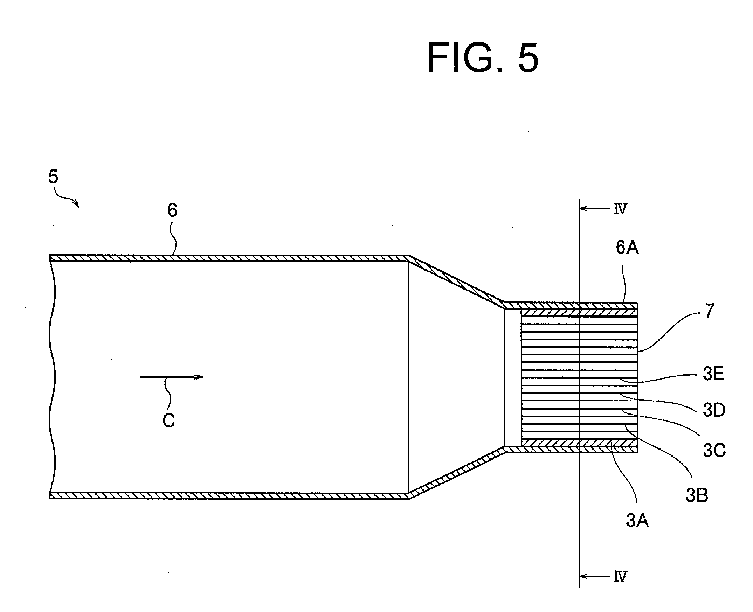

The following will describe a method for manufacturing the plasma treatment device 1 according to the first preferred embodiment of the present invention. Fig. 5 shows an extrusion device 5 for forming the honeycomb body 2. The extrusion device 5 has a cylindrical feed passage 6 which is to be filled with ceramic raw material as a dielectric material. An extrusion die 7 for forming the honeycomb body 2 is provided at the inside of a front end 6A of the extrusion device 5. The ceramic raw material is prepared by mixing ceramic powder, which is a material for the honeycomb body 2, with water, a binder and the like so as to obtain clayey material. The extrusion device 5 is provided with a pressurization device not shown in the drawings, and applies pressure to the ceramic raw material filled in the feed passage 6 in the direction indicated by an arrow C in Fig. 5. The ceramic raw material in the feed passage 6 passes through the inside of the extrusion die 7 so as to be formed in the shape of the honeycomb body 2. Then, the ceramic raw material is extruded outside of the extrusion device 5.

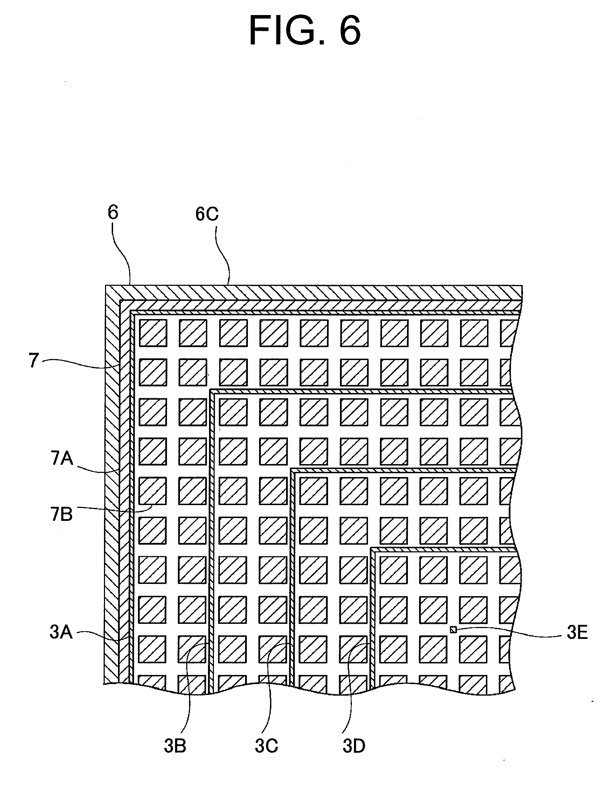

In forming the honeycomb body 2 by the extrusion device 5, the metal electrodes 3A, 3B, 3C, 3D, and 3E are positioned inside of the extrusion die 7. As shown in Fig. 6, the extrusion die 7 has an outer peripheral portion 7A contacting with the inner circumferential surface of the front end 6A of the feed passage 6. Hole-forming portions 7B for forming the holes 2A of the honeycomb body 2 are provided at the inner side of the outer peripheral portion 7A. The outermost metal electrode 3A is positioned in such a state that the metal electrode 3A is in contact with an inner side of the outer peripheral portion 7A of the extrusion die 7 while being spaced apart from the hole-forming portions 7B at an inner side of the metal electrode 3A. The metal electrodes 3B, 3C, 3D, and 3E at the inner side of the metal electrode 3A are positioned inside the extrusion die 7 in such a state that the metal electrodes 3B, 3C, 3D, and 3E are spaced apart from the hole-forming portions 7B at the both surfaces of the metal electrodes 3B, 3C, 3D, and 3E.

In a state where the metal electrodes 3A, 3B, 3C, 3D, and 3E are positioned as described above, ceramic raw material is provided into the extrusion die 7. The ceramic raw material passes through the inside of the extrusion die 7, while covering the metal electrodes 3B, 3C, 3D, and 3E and the inner surface of the metal electrode 3A, and extrusion is performed. The ceramic raw material is extruded outside of the extrusion device 5 together with the metal electrodes 3A, 3B, 3C, 3D, and 3E, and goes through a drying process and a firing process. Thus, the honeycomb body 2 is manufactured so as to have the structure in that the metal electrode 3A is placed at the outer periphery and that the metal electrodes 3B, 3C, 3D, and 3E are embedded inside thereof. With such a structure, the honeycomb body 2 is reinforced by the metal electrodes 3A, 3B, 3C, 3D, and 3E, thereby improving the strength thereof.

In forming the honeycomb body 2 by extrusion, the metal electrodes 3A, 3B, 3C, 3D, and 3E are positioned inside of the extrusion die 7 to be extruded together with ceramic raw material. Therefore, ceramic material for forming the honeycomb body 2 is integrated with the metal electrodes 3A, 3B, 3C, 3D, and 3E, before the ceramic material is cured and becomes to be easily cracked. Further, the honeycomb body 2 is in advance integrated with the metal electrodes 3A, 3B, 3C, 3D, and 3E, and the number of parts is reduced in assembling the plasma treatment device 1. Therefore, the honeycomb body 2 and the metal electrodes 3A, 3B, 3C, 3D, and 3E are easily integrated, thereby improving the efficiency in manufacturing the plasma treatment device 1 for exhaust gas purification.

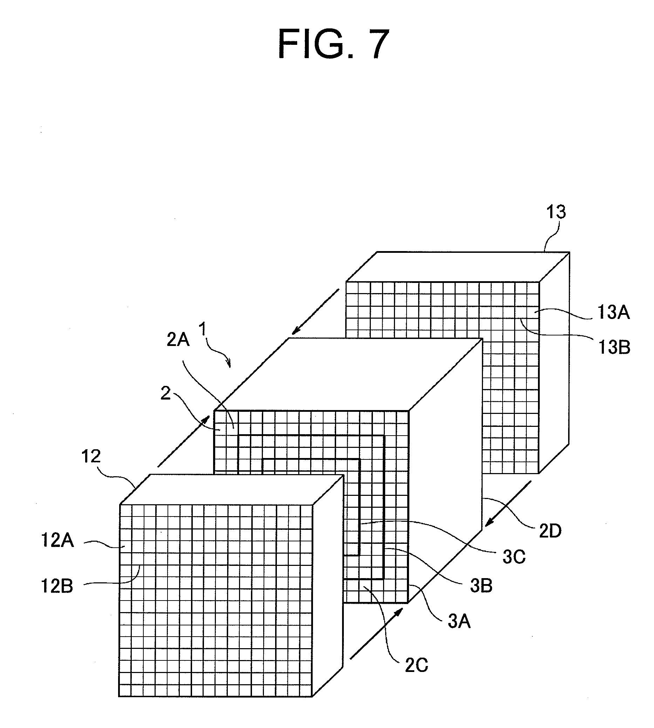

The following will describe a second preferred embodiment with reference to Fig. 7. Like or same parts or elements will be referred to by the same reference numerals as those in Figs. 1 though 6, and the description thereof will be omitted.

The plasma treatment device of the second preferred embodiment differs from the method manufacturing the plasma treatment device 1 of the first preferred embodiment in providing with retaining members. The retaining members are provided at the opposite sides of the honeycomb body 2 after integrating the honeycomb body 2 with the metal electrodes 3A, 3B, 3C, 3D, and 3E.

As shown in Fig. 7, retaining members 12, 13 are provided at one end face 2C and the opposite end face 2D of the honeycomb body 2 integrated with the metal electrodes 3A, 3B, 3C, 3D, and 3E. The retaining members 12, 13 are made of ceramic material, and fixed to the honeycomb body 2 by an adhesive and the like. Each of the retaining members 12, 13 is formed in a rectangular cylinder shape with a rectangular cross section, similar to the honeycomb body 2. The retaining members 12, 13 have holes 12A, 13A, respectively, and partition walls 12B, 13B defining the holes 12A, 13A, similar to the honeycomb body 2. That is, with such a structure, exhaust gas flows through the holes 12A in the retaining member 12, the holes 2A in the honeycomb body 2, and the holes 13A in the retaining member 13, sequentially in this order. The retaining members 12, 13 are not provided with metal electrodes at the outer periphery and the inside, and the opposite ends of the metal electrodes 3A, 3B, 3C, 3D, and 3E contact with the partition walls 12B, 13B of the retaining members 12, 13. Therefore, the metal electrodes 3A, 3B, 3C, 3D, and 3E are fixed to the honeycomb body 2 while being supported by the retaining members 12, 13 at the opposite ends in the direction that the metal electrodes 3A, 3B, 3C, 3D, and 3E extend along the holes 2A. The other structures and the method for manufacturing the plasma treatment device 1 are the same as the first embodiment.

Thus, with the structure having the retaining members 12, 13 at the opposite ends of the honeycomb body 2, the metal electrodes 3A, 3B, 3C, 3D, and 3E are fixed to the honeycomb body 2 in such a state that the opposite ends of the metal electrodes 3A, 3B, 3C, 3D, and 3E are supported by the retaining members 12, 13. The retaining members 12, 13 restrict the movement of the metal electrodes 3A, 3B, 3C, 3D, and 3E in the direction along the holes 2A of the honeycomb body 2. Therefore, the metal electrodes 3A, 3B, 3C, 3D, and 3E are prevented from being removed from the honeycomb body 2 even in case that the metal electrodes 3A, 3B, 3C, 3D, and 3E are broken away from the honeycomb body 2.

The present invention is not limited to the above-described embodiments and may be modified into following alternative embodiments within the scope of the invention.

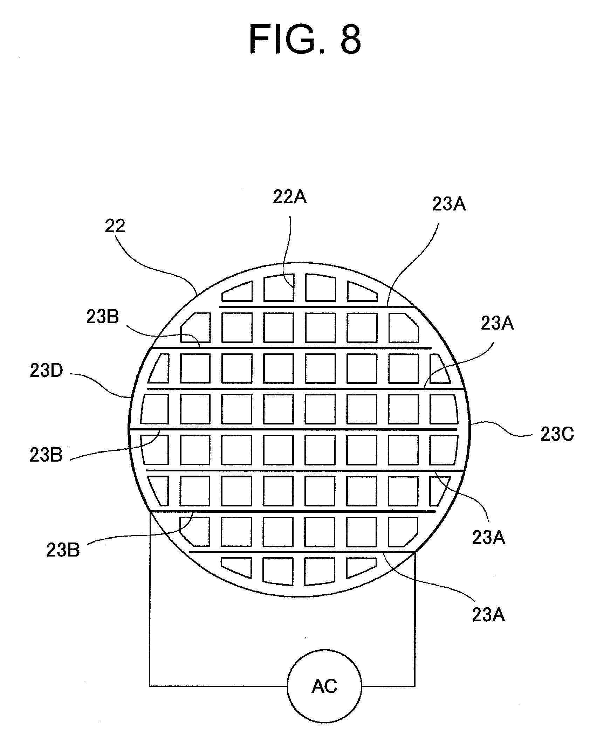

In the first and the second preferred embodiments, the honeycomb body 2 is formed in the rectangular cylinder shape, and the metal electrodes are formed in the rectangular cylinder shape or the wire shape, however, the configurations are not limited to the above shapes. As shown in Fig. 8, a honeycomb body 22 in a cylinder shape may have inside thereof thin plate-like metal electrodes 23A, 23B which are arranged parallel to each other in a multi-layered manner.

In the first and the second preferred embodiments, the honeycomb body 2 is the flow-through type DPF, however, the type of the honeycomb body is not limited to the flow-through type. The honeycomb body may be a wall-flow type DPF in which the metal electrodes are made of metal mesh through which exhaust gas passes.

In the first and the second preferred embodiments, the honeycomb body 2 is the DPF for collecting PM in exhaust gas, however, the function of the honeycomb body is not limited to that of the DPF. The honeycomb body may serve to oxidize harmful components such as carbon monoxide (CO) or nitrogen monoxide (NO) by generating plasma for exhaust gas purification.

Therefore, the present examples and embodiments are to be considered as illustrative and not restrictive, and the invention is not to be limited to the details given herein but may be modified within the scope of the appended claims.

A plasma treatment device for exhaust gas purification includes a honeycomb body and metal electrodes. The honeycomb body is made of dielectric and has therein a plurality of holes which introduces exhaust gas thereinto. The metal electrodes extend along the holes, and are interposed between the holes. The plasma treatment device purifies the exhaust gas by applying electric voltage between the metal electrodes to generate plasma inside the holes. A method for manufacturing the plasma treatment device includes steps of positioning the metal electrodes in an extrusion die, providing dielectric material for the honeycomb body into the extrusion die, and performing extrusion so as to form the honeycomb body thereby integrating the honeycomb body with the metal electrodes.

## Claims

1. A method for manufacturing a plasma treatment device (1) for exhaust gas purification, the plasma treatment device (1) comprising:
a honeycomb body (2, 22) made of dielectric and having therein a plurality of holes (2A) which introduces exhaust gas thereinto;
a plurality of metal electrodes (3A, 3B, 3C, 3D, 3E) extending along the holes (2A), wherein the metal electrodes (3A, 3B, 3C, 3D, 3E) are interposed between the holes (2A), wherein the plasma treatment device (1) purifies the exhaust gas by applying electric voltage between the metal electrodes (3A, 3B, 3C, 3D, 3E) to generate plasma inside the holes (2A);
the method for manufacturing the plasma treatment device (1) **characterized by** steps of:
positioning the metal electrodes (3A, 3B, 3C, 3D, 3E) in an extrusion die (7);
providing dielectric material for the honeycomb body (2, 22) into the extrusion die (7); and
performing extrusion so as to form the honeycomb body (2, 22) thereby integrating the honeycomb body (2, 22) with the metal electrodes (3A, 3B, 3C, 3D, 3E).

2. The method for manufacturing the plasma treatment device (1) according to claim 1, **characterized in that** the dielectric material is porous so as to collect particulate matter contained in the exhaust gas introduced into the holes (2A).

3. The method for manufacturing the plasma treatment device (1) according to claims 1 or 2, **characterized by** steps of:
providing the extrusion die (7) with an outer peripheral portion (7A) and hole-forming portions (7B) positioned at an inner side of the outer peripheral portion (7A);
positioning the outermost metal electrode (3A) so as to be in contact with the outer peripheral portion (7A) of the extrusion die (7) while being spaced apart from the hole-forming portions (7B); and
positioning the metal electrodes (3A, 3B, 3C, 3D, 3E) at the inner side of the outermost metal electrode (3A) so as to be spaced apart from the hole-forming portions (7B) of the extrusion die (7).

4. The method for manufacturing the plasma treatment device (1) according to any one of claims 1 through 3, **characterized by** steps of drying and firing the honeycomb body (2, 22).

5. The method for manufacturing the plasma treatment device (1) according to any one of claims 1 through 4, **characterized by** a step of providing a retaining member (12, 13) to the honeycomb body (2, 22) so as to restrict the movement of the metal electrodes (3A, 3B, 3C, 3D, 3E) in the direction along the holes (2A).
